# FASCICULE DE BREVET EUROPEEN

(11) **EP 3 171 076 B1**
(45) Date de publication et mention de la délivrance du brevet: **05.05.2021**
(21) Numéro de dépôt: 16200318.0
(22) Date de dépôt: 23.11.2016
(51) Int. Cl.: F21V 8/00, G02B 27/10, G02B 27/01

(54) **ÉLÉMENT D'AFFICHEUR ET AFFICHEUR COMPRENANT UN ÉLÉMENT**
ELEMENT EINES ANZEIGEGERÄTS UND ANZEIGEGERÄT, DAS EIN SOLCHES ELEMENT UMFASST
DISPLAY ELEMENT AND DISPLAY COMPRISING AN ELEMENT

(30) Priorité: 23.11.2015 FR 1561254
(43) Date de publication de la demande: 24.05.2017
(73) Titulaire: Valeo Comfort and Driving Assistance, 94046 Créteil Cedex (FR)
(72) Inventeur: GRANDCLERC, François, 94046 Créteil Cedex (FR); BOMBARD, Stéphane, 78320 Le Mesnil Saint Denis (FR)
(74) Mandataire: Delplanque, Arnaud

(56) Documents cités:
- WO-A1-2014/102463
- US-A1- 2005 013 127
- US-A1- 2005 254 771

## Description

### DOMAINE TECHNIQUE AUQUEL SE RAPPORTE L'INVENTION

La présente invention concerne un élément d'afficheur, utilisé notamment dans un afficheur tête haute pour véhicule automobile.

Elle concerne plus particulièrement un élément d'afficheur comprenant une lame semi-réfléchissante, au moins partiellement transparente pour permettre l'observation d'un environnement à travers la lame, et permettant de projeter dans cet environnement, par réflexion sur la lame, une image virtuelle à afficher.

L'invention s'applique de manière particulièrement avantageuse dans le cas où l'on souhaite éclairer une partie du contour de cette lame semi-réfléchissante pour rendre lumineuse cette partie du contour de la lame.

L'invention concerne également un afficheur, notamment un afficheur tête haute, comprenant un tel élément d'afficheur.

### ARRIERE-PLAN TECHNOLOGIQUE

Pour le conducteur d'un véhicule automobile, il est particulièrement confortable de pouvoir visualiser des informations supplémentaires, relatives au fonctionnement du véhicule, à l'état du trafic, ou autres, sans avoir pour cela à détourner son regard de la route faisant face au véhicule.

Il est connu dans ce but d'équiper un véhicule automobile avec un afficheur dit tête haute. Un tel afficheur utilise une réflexion partielle sur un élément situé devant le conducteur, par exemple une lame semi-réfléchissante disposée entre le parebrise du véhicule et les yeux du conducteur, pour projeter une image virtuelle comportant les informations à afficher, de manière à ce qu'elle se superpose visuellement à l'environnement faisant face au véhicule.

On connait du document WO 2014/102463 un dispositif de transmission d'images pour un afficheur tête haute, comprenant une telle lame semi-réfléchissante. Cette lame forme globalement une plaque au contour en forme de rectangle. Elle est montée sur le tableau de bord d'un véhicule, au niveau de l'un des bords de ce rectangle, et s'élève au dessus de ce tableau de bord, dans le champ de vision d'un conducteur du véhicule.

La tranche de cette plaque, c'est-à-dire la surface qui la délimite latéralement est formée par quatre faces : une face dite d'entrée située en vis-à-vis du tableau de bord, et trois autres faces dites de sortie.

Des sources lumineuses sont disposées en vis-à-vis de ce cette face d'entrée. Elles émettent un rayonnement lumineux qui entre dans la lame semi-réfléchissante par cette face d'entrée. A la manière d'un guide de lumière, la lame semi-réfléchissante guide ensuite ce rayonnement lumineux à l'intérieur de la lame, jusqu'aux trois faces de sortie. Ce rayonnement lumineux sort alors de la lame semi-réfléchissante par ces faces de sortie, au niveau desquelles il est dévié, ou diffusé, en direction des yeux du conducteur du véhicule.

Dans ce dispositif de transmission d'images, une partie du contour de la lame semi-réfléchissante apparaît donc lumineuse au conducteur du véhicule. Eclairer ainsi le contour de cette lame semi-réfléchissante permet notamment de transmettre un signal au conducteur du véhicule, par exemple un signal d'alerte obtenu en éclairant de manière intermittente le contour de la lame.

Mais, dans ce dispositif de transmission d'images, les deux faces de sortie qui s'étendent à partir de la face d'entrée de la lame semi-réfléchissante (et sensiblement perpendiculairement à cette face d'entrée) ne reçoivent qu'une fraction très faible du rayonnement lumineux émis par les sources lumineuses. La face de sortie de la lame qui s'étend à l'opposée de la face d'entrée de cette lame reçoit en revanche une fraction importante du rayonnement lumineux émis par les sources lumineuses.

Ainsi, dans ce dispositif de transmission d'images, seul un bord du contour rectangulaire de la lame apparait nettement lumineux au conducteur du véhicule On connaît également le document US2005/0254771 dans lequel un système lenticulaire permet l'homogénéisation de l'illumination dans un guide de lumière plan.

### OBJET DE L'INVENTION

Dans ce contexte, la présente invention propose un élément d'afficheur selon la revendication 1.

Ainsi, le premier faisceau lumineux éclaire une première zone de la tranche de la lame, située dans le prolongement de la première direction moyenne de propagation présentée par ce premier faisceau lumineux dans la lame semi-réfléchissante, tandis que le deuxième faisceau lumineux éclaire une deuxième zone de la tranche de la lame, différente de la première zone et située dans le prolongement de la deuxième direction moyenne de propagation présentée par le deuxième faisceau lumineux dans la lame semi-réfléchissante.

Grâce à l'invention, deux zones différentes de la tranche de la lame sont ainsi éclairées efficacement, ce qui permet d'augmenter avantageusement l'étendue de la partie du contour de la lame qui apparait lumineuse à un conducteur du véhicule.

D'autres caractéristiques optionnelles sont définies par les revendications dépendantes.

L'invention propose également un afficheur comprenant un élément d'afficheur tel que proposé ci-dessus.

Selon une caractéristique optionnelle, et non limitative, cet afficheur comprend en outre un boîtier, ladite lame semi-réfléchissante étant montée mobile par rapport à ce boîtier.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un afficheur tête haute mettant en œuvre les enseignements de l'invention,
- la figure 2 est une vue schématique en perspective d'un élément d'afficheur de l'afficheur de la figure 1,
- la figure 3 est une vue schématique en perspective d'une lame semi-réfléchissante de l'élément d'afficheur de la figure 2,
- la figure 4 est une vue schématique de face de la lame semi-réfléchissante de la figure 3,
- la figure 5 est une vue schématique de dessus d'un support de l'élément d'afficheur de la figure 2,
- la figure 6 est une vue schématique de face, partielle, de l'élément d'afficheur de la figure 2, et
- la figure 7 est une vue schématique de côté d'une autre lame semi-réfléchissante pouvant équiper un tel élément d'afficheur.

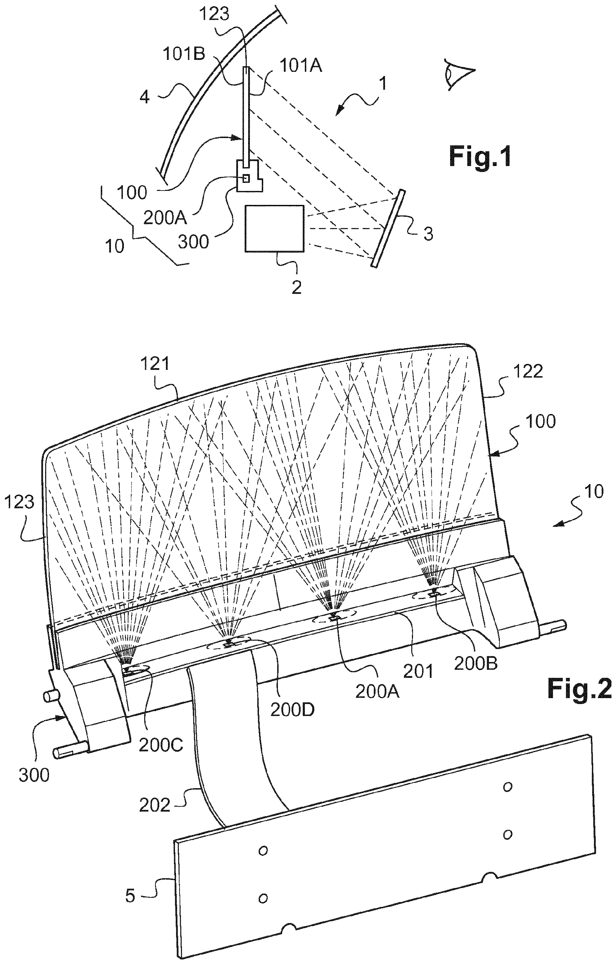

La figure 1 représente schématiquement les composants principaux d'un afficheur 1 tête haute destiné à équiper un véhicule, par exemple un véhicule automobile.

Un tel afficheur 1 comprend un ensemble optique de projection, qui comporte ici une unité de génération d'image 2 et un miroir de renvoi 3 conçus pour projeter une image générée par l'unité de génération d'image 2 dans le champ de vision du conducteur du véhicule, grâce à une lame 100 semi-réfléchissante, également dénommée "*combineur*", placée dans ce champ de vision.

On peut ainsi afficher des informations dans le champ de vision du conducteur sans que celui-ci n'ait à détourner le regard de la route suivie par le véhicule. La lame 100 semi-réfléchissante utilisée à cette fin est ici un élément optique distinct du pare-brise 4 du véhicule, et disposée de préférence entre le pare-brise 4 du véhicule et les yeux du conducteur.

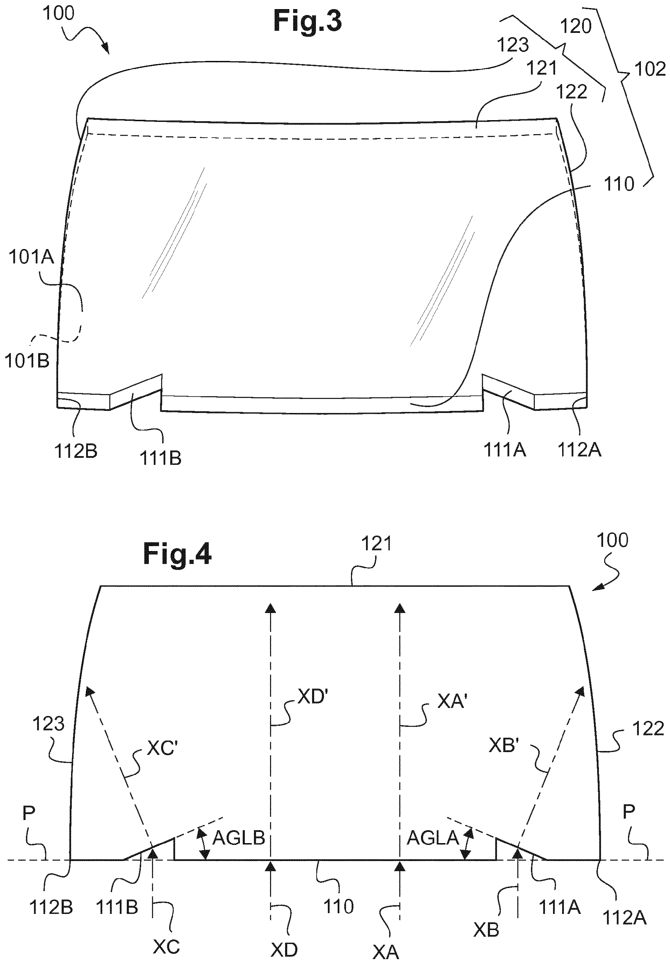

La lame 100 semi-réfléchissante, représentée plus en détail sur les figures 3 et 4, est formée d'une plaque transparente, par exemple en matière plastique ou en verre, plane ou incurvée, présentant deux faces principales 101A, 101B reliées par une tranche 102. Une réflexion partielle sur l'une de ces deux faces principales 101A, 101B, ici sur la face principale 101A située du côté du conducteur, de l'image projetée par l'ensemble optique de projection, permet de superposer visuellement cette image à un environnement situé face au véhicule automobile.

La tranche 102 de la lame, c'est-à-dire la surface délimitant latéralement cette lame 100, comprend ici (figure 3) :
- une première partie, formant une face d'entrée 110 pour des faisceaux lumineux, comme cela est expliqué plus bas, et
- une deuxième partie 120, par laquelle ces faisceaux lumineux peuvent sortir de la lame 100 semi-réfléchissante.

La lame 100 semi-réfléchissante présente ici un contour ayant globalement la forme d'un rectangle. La face d'entrée 110 de la tranche 102 de la lame correspond à l'un des côtés de ce rectangle, tandis que la deuxième partie 120 de cette tranche 102 correspond aux trois autres côtés de ce rectangle.

Cette face d'entrée 110 est délimitée par une première extrémité 112A et une deuxième extrémité 112B opposée à cette première extrémité 112A correspondant chacune, ici, à un sommet de ce rectangle. La face d'entrée 110 de la lame 100 s'étend sur tout un côté du contour rectangulaire de la lame 100.

Par ailleurs, ici, la deuxième partie 120 de la tranche 102 comprend une première, une deuxième et une troisième faces 121, 122, 123, chacune de ces faces correspondant à l'un des côtés du contour rectangulaire de la lame 100.

Cette première face 121 est située le long de la tranche 102 de la lame, à l'opposé de ladite face d'entrée 110 par rapport à la lame. La deuxième face 122 s'étend à partir de la première extrémité 112A de la face d'entrée 110, et relie cette face d'entrée 110 à la première face 121 (cette première extrémité 112A correspond ici à l'un des sommets du contour rectangulaire de la lame 100 semi-réfléchissant). La troisième face 123 s'étend à partir de la deuxième extrémité 112B de la face d'entrée 110, et relie également la face d'entrée 110 à la première face 121.

En variante, le contour de la lame semi-réfléchissante pourrait présenter une autre forme, par exemple hémicirculaire, trapézoïdale, ou encore triangulaire. Dans le cas d'une forme hémicirculaire, par exemple, la face d'entrée de la tranche de la lame pourrait correspondre au bord rectiligne de ce contour hémicirculaire, tandis que la deuxième partie de la tranche de cette lame correspondrait à la partie courbe de ce contour.

La lame 100 semi-réfléchissante est comprise dans un élément d'afficheur 10 de l'afficheur 1 qui comporte, en plus de cette lame 100, plusieurs sources lumineuses 200A, 200B, 200C, 200D, préférentiellement plus de trois, disposées en vis-à-vis de la face d'entrée 110 de la tranche 102 de la lame (figures 1, 2 et 6).

Ici, plus précisément, l'élément d'afficheur 10 comporte une première, une deuxième, une troisième et une quatrième sources lumineuses 200A, 200B, 200C, 200D, disposées en vis-à-vis de la face d'entrée 110 de la tranche 102 de la lame.

Chacune de ces sources lumineuses 200A, 200B, 200C, 200D émet un faisceau lumineux dirigé vers cette face d'entrée 110, par laquelle il entre dans la lame 100 semi-réfléchissante.

A la manière d'un guide de lumière, la lame 100 semi-réfléchissante guide ensuite ces faisceaux lumineux à l'intérieur de la lame 100, jusqu'à la deuxième partie 120 de la tranche 102 de la lame, par laquelle ces faisceaux lumineux sortent de la lame. Cette deuxième partie 120 de la tranche de la lame émet ainsi de la lumière, et apparaît comme lumineuse au conducteur du véhicule.

Préférentiellement, cette deuxième partie 120 de la tranche de la lame est configurée pour dévier au moins en partie ces faisceaux lumineux vers le conducteur du véhicule lorsqu'ils sortent de la lame 100, de manière à augmenter la luminosité de cette deuxième partie 120 de la tranche 102 de la lame du point de vue du conducteur.

Pour cela, la deuxième partie 120 de la tranche 102 de la lame est ici dépolie, c'est-à-dire grainée, ce qui la rend optiquement diffusante. Ce grainage permet en outre d'éviter que les bords de la lame 100 semi-réfléchissante ne soient coupants.

En variante, des particules diffusantes peuvent être disposées sur cette deuxième partie de la tranche de la lame pour augmenter sa luminosité du point de vue du conducteur.

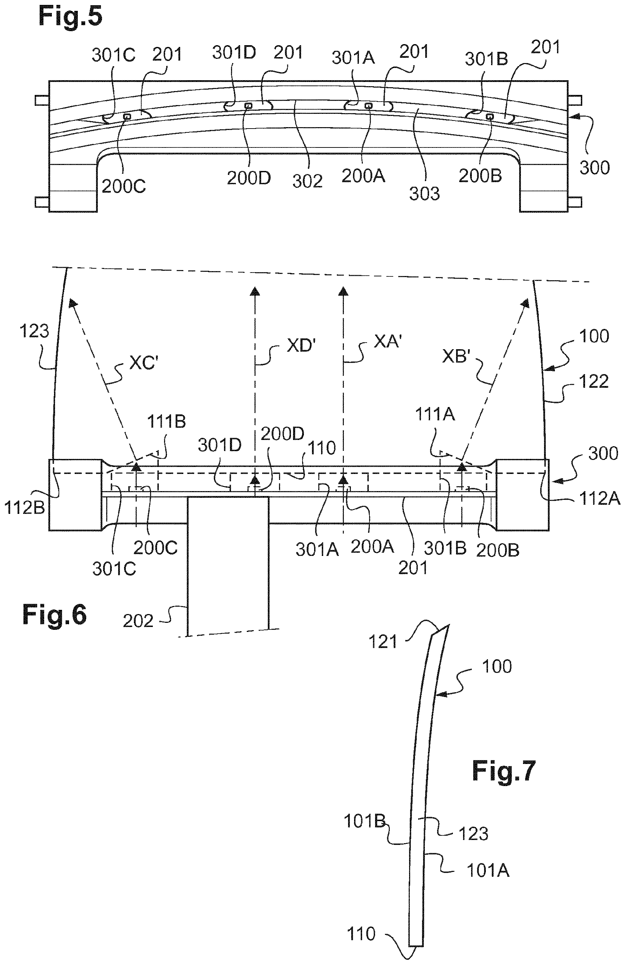

Selon une autre variante, cette deuxième partie de la tranche de la lame 100 peut être biseautée, pour dévier ces faisceaux lumineux vers le conducteur du véhicule, comme illustré figure 7.

Dans le mode de réalisation décrit ici, la lame 100 semi-réfléchissante est distincte du pare-brise du véhicule.

Dans un autre mode de réalisation, la lame semi-réfléchissante permettant d'afficher ces informations dans le champ de vision du conducteur peut être constituée par le pare-brise du véhicule, l'ensemble optique de projection utilisant alors directement ce pare-brise pour projeter dans le champ de vision du conducteur l'image générée par l'unité de génération d'image. Ce mode de réalisation s'avère intéressant notamment lorsque le véhicule est une motocyclette, car, dans ce cas, une partie de la tranche du pare-brise est visible.

Les première, deuxième, troisième et quatrième sources lumineuses 200A, 200B, 200C, 200D sont disposées ici régulièrement le long de la face d'entrée 110.

La deuxième source lumineuse 200B est située ici à proximité de la première extrémité 112A de la face d'entrée 110 (figure 6), tandis que la troisième source lumineuse 200C est située à proximité de la deuxième extrémité 112B de cette face d'entrée 110.

Les première et quatrième sources lumineuses 200A, 200D sont situées le long de la face d'entrée 110, entre les deuxième et troisième sources lumineuses 200B, 200C, c'est-à-dire dans une zone centrale de la face d'entrée 110.

Les première, deuxième, troisième et quatrième sources lumineuses 200A, 200B, 200C, 200D émettent respectivement un premier, deuxième, troisième et quatrième faisceaux lumineux.

Ici, avant de pénétrer dans la lame 100 semi-réfléchissante, les premier, deuxième, troisième et quatrième faisceaux lumineux présentent respectivement une première, deuxième, troisième et quatrième direction initiale moyenne de propagation XA, XB, XC, XD chacune sensiblement orthogonale au plan moyen P défini par la face d'entrée 110, comme cela est représenté figure 4.

La face d'entrée 110 présente, en vis-à-vis de la première et de la quatrième source lumineuse 200A, 200D, une première orientation. Cette première orientation correspond ici à l'orientation moyenne de la face d'entrée 110 de la tranche 102 de la lame semi-réfléchissante. Plus précisément, cette première orientation correspond ici à l'orientation du plan moyen P défini par cette face d'entrée 110 (figure 4).

Ici, comme les première et quatrième directions initiales moyennes de propagation XA, XD sont chacune sensiblement orthogonale à ce plan moyen P, la direction moyenne de propagation du premier faisceau lumineux et celle du quatrième faisceau lumineux ne sont pas modifiées notablement par l'entrée dans la lame 100. Ainsi, les premier et quatrième faisceaux lumineux présentent respectivement une première et une quatrième direction moyenne de propagation XA', XD' dans la lame 100 sensiblement orthogonale au plan moyen P défini par la face d'entrée 110.

Ces premier et quatrième faisceaux lumineux éclairent une première zone de la tranche 102 de la lame, située dans le prolongement de ces première et quatrième directions moyenne de propagation XA', XD' dans la lame 100 semi-réfléchissante. Cette première zone correspond ici principalement à la première face 121 de la tranche 102 de la lame, dont on rappelle qu'elle s'étend le long d'un côté de la lame 110 opposé à la face d'entrée 110.

Selon une caractéristique remarquable, la face d'entrée 110 de la tranche 102 de la lame semi-réfléchissante présente, en vis-à-vis de la deuxième source lumineuse 200B, une deuxième orientation distincte de la première orientation, de sorte que le deuxième faisceau lumineux présente une deuxième direction moyenne de propagation XB' dans la lame 100 différente de la première direction moyenne de propagation XA' (présentée par le premier faisceau lumineux dans la lame 100 semi-réfléchissante).

Ici, la face d'entrée 110 de la tranche 102 de la lame semi-réfléchissante présente également, en vis-à-vis de la troisième source lumineuse 200C, une troisième orientation, distincte de la première orientation et de la deuxième orientation, de sorte que le troisième faisceau lumineux présente une troisième direction moyenne de propagation XC' dans la lame 100 différente de la première direction moyenne de propagation XA', et différente de la deuxième direction moyenne de propagation XB' (présentée par le deuxième faisceau lumineux dans la lame 100 semi-réfléchissante).

Les deuxième et troisième faisceaux lumineux éclairent respectivement une deuxième et une troisième zone de la tranche 102 de la lame 100, chacune situées respectivement dans le prolongement de la deuxième et de la troisième direction moyenne de propagation XB', XC' dans la lame. Comme ces deuxième et troisième directions moyennes de propagation XB', XC' sont différentes de la première direction moyenne de propagation XA', ces deuxième et une troisième zones éclairées sont différentes de la première zone éclairée mentionnée ci-dessus (c'est-à-dire qu'elles sont au moins partiellement distinctes de cette première zone).

Ainsi, grâce aux trois orientations distinctes présentées par la face d'entrée en vis-à-vis de ces première, deuxième et troisième sources lumineuses 200A, 200B, 200C, trois zones de la tranche 102 de la lame différentes sont éclairées efficacement, ce qui permet d'augmenter avantageusement l'étendue de la partie du contour de la lame 100 qui apparait lumineuse à un conducteur du véhicule.

Ici, plus précisément, lesdites deuxième et troisième orientations correspondent respectivement à l'orientation d'une première facette 111A et d'une deuxième facette 111B présentées par la face d'entrée 110 de la lame, respectivement en vis-à-vis de la deuxième source lumineuse 200B et de la troisième source lumineuse 200C (figures 3, 4 et 6). Ces première et deuxième facettes 111A, 111B sont inclinées chacune par rapport au plan moyen P défini par cette face d'entrée 110 de manière à dévier par réfraction, respectivement le deuxième et le troisième faisceau lumineux, en direction de la zone correspondante de la tranche 102 de la lame 100.

Plus précisément, ici, du fait de l'inclinaison des première et deuxième facettes 111A, 111B par rapport au plan moyen P défini par la face d'entrée 110, ni le deuxième faisceau lumineux, ni le troisième faisceau lumineux n'entre, en moyenne, en incidence normale dans la lame. Chacun des deuxième et troisième faisceaux lumineux est donc dévié par réfraction à la traversée, respectivement de la première et de la deuxième facette 111A, 111B.

Grâce à cette déviation, la deuxième direction moyenne de propagation XB', présentée dans la lame par le deuxième faisceau lumineux, s'écarte de la deuxième direction initiale moyenne de propagation XB qu'il présente avant d'entrer dans la lame, et donc s'écarte aussi, avantageusement, de la première direction moyenne de propagation XA' présentée par le premier faisceau lumineux dans la lame.

De manière comparable, grâce à cette déviation, la troisième direction moyenne de propagation XC', présentée dans la lame par le troisième faisceau lumineux, s'écarte de la troisième direction initiale moyenne de propagation XC qu'il présente avant d'entrer dans la lame, et donc s'écarte aussi, avantageusement, de la première direction moyenne de propagation XA' présentée par le premier faisceau lumineux dans la lame.

La deuxième zone de la tranche 102 de la lame, vers laquelle est déviée (en moyenne) le deuxième faisceau lumineux, s'étend ici le long de cette tranche à partir de la première extrémité 112A de la face d'entrée 110.

La troisième zone de la tranche 102 de la lame, vers laquelle est dévié (en moyenne) le troisième faisceau lumineux, s'étend quant à elle le long de cette tranche 102 à partir de la deuxième extrémité 112B de la face d'entrée 110, du côté opposé à ladite première extrémité 112A.

Ici, cette deuxième zone correspond principalement à la deuxième face 122 de la tranche 102 de la lame, tandis que cette troisième zone correspond principalement à la troisième face 123 de la tranche 102 de la lame (figure 4). On rappelle que ces deuxième et troisième faces 122, 123 de la tranche de la lame correspondent aux deux côtés du contour rectangulaire de la lame contigus à la face d'entrée 110, et sensiblement perpendiculaires à celle-ci.

Chacune des première et deuxième facettes 111A, 111B est définie ici au niveau d'une encoche ménagée dans la lame 100 semi-réfléchissante, en vis-à-vis de la source lumineuse correspondante.

En variante, au lieu d'être obtenues en ménageant deux encoches dans la lame semi-réfléchissante, ces première et deuxième facettes pourraient être formées au niveau de deux reliefs, par exemple en forme de prisme, présentés par de la face d'entrée en vis-à-vis des deuxième et troisième sources lumineuses, et s'étendant en saillie par rapport à la tranche de lame.

Chacune de ces deux encoches est ménagée sur toute l'épaisseur de la lame 100, c'est-à-dire de l'une à l'autre des deux faces principales 101A, 101B de la lame 100, et selon un axe (axe longitudinal de l'encoche) sensiblement perpendiculairement à ces faces principales.

Chacune de ces deux encoches présente ici un profil sensiblement en forme de V et dissymétrique. Cette encoche définit ainsi deux surfaces sur la face d'entrée 110 (correspondant aux deux branches de ce profil en forme de V). L'une de ces deux surfaces forme ladite première ou deuxième facette 111A, 111B. L'autre de ces deux surfaces s'étend ici sensiblement perpendiculairement au plan moyen P défini par la face d'entrée 110.

Chacune des première et deuxième facettes 111A, 111B est ici sensiblement plane.

Des angles AGLA et AGLB, formés respectivement entre la première facette 111A et le plan moyen P défini par la face d'entrée 110 et entre la deuxième facette 111B et ce plan moyen P, repèrent l'inclinaison de ces deux facettes par rapport à la face d'entrée 110. Ces angles AGLA et AGLB sont compris typiquement entre 20 degrés et 70 degrés.

La déviation des deuxième et troisième faisceaux lumineux, lors de leur entrée dans la lame 100 semi-réfléchissante par les première et deuxième facettes 111A, 111B, dépend de l'inclinaison de ces facettes et de l'indice optique du matériau formant la lame 100 ; cette déviation est en particulier d'autant plus grande que ces facettes sont inclinées (c'est-à-dire qu'elle est d'autant plus grande que les angles AGLA et AGLB sont grands).

Ainsi, l'homogénéité de la luminosité présentée par la tranche 102 de lame, sur l'ensemble de ses première, deuxième et troisièmes faces 121, 122, 123, peut être optimisée en ajustant l'inclinaison de ces première et deuxième facettes 111A, 111B. Cet ajustement peut être réalisé par exemple lors d'essais ou lors de simulations de tracés de rayons lumineux par ordinateur.

Les angles AGLA et AGLB peuvent aussi être choisis de manière à dévier respectivement le deuxième faisceau lumineux vers le milieu de la deuxième face 122 de la tranche 102 de la lame 100, et le troisième faisceau lumineux vers le milieu de la troisième face 123 de la tranche 102 de la lame 100.

De manière optionnelle, on peut prévoir également, pour optimiser l'homogénéité de la luminosité présentée par la tranche de lame, que ces première et deuxième facettes présentent chacune des reliefs, par exemple un grainage ou des reliefs en forme de marches d'escalier, ou encore des reliefs présentant une forme aléatoire. De tels reliefs permettent en effet d'augmenter l'ouverture angulaire du deuxième faisceau lumineux, et l'ouverture angulaire du troisième faisceau lumineux, lorsque ces faisceaux lumineux entrent dans la lame 100 semi-réfléchissante. Ainsi, grâce à ces reliefs, l'étendue de la partie de la deuxième face 122 de la tranche 102 de la lame 100 éclairée par le deuxième faisceau lumineux, et l'étendue de la partie de la troisième face 123 de la tranche 102 de la lame 100 éclairée par le troisième faisceau lumineux sont avantageusement augmentées.

On notera qu'une homogénéité optimisée de la luminosité de la tranche 102 de la lame est obtenue ici au moyen d'un élément d'afficheur 10 dont la réalisation est avantageusement aisée. Il est en effet facile, en termes de fabrication, de pratiquer lesdites encoches sur la lame semi-réfléchissante.

Ici, l'élément d'afficheur 10 comprend, en plus de la lame 100 et des sources lumineuses 200A, 200B, 200C, 200D susmentionnées, un support 300 (figures 1, 2, 5 et 6) auquel sont fixées cette lame 100 et ces sources lumineuses 200A, 200B, 200C, 200D.

Ce support 300 présente une gorge 302 (figure 5) dans laquelle est enchâssée la lame 100 semi-réfléchissante. Plus précisément, la face d'entrée 110 de la tranche 102 de la lame prend appui sur le fond 303 de cette gorge 302. Cette gorge 302 s'étend par ailleurs sur une longueur sensiblement égale ou légèrement supérieure à la longueur de cette face d'entrée 110.

Les sources lumineuses 200A, 200B, 200C, 200D de l'élément d'afficheur 10, ici des diodes électroluminescentes, sont montées fixement sur une plaque-support de circuit imprimé 201 (figures 2 et 6). Cela facilite la manipulation, le montage et le raccordement électrique de ces sources. Cette plaque-support de circuit imprimé 201 est fixée au support 300. Elle s'étend sensiblement parallèlement au fond 303 de ladite gorge 302, et donc sensiblement parallèlement à la face d'entrée 110 de la lame 100.

Cette plaque-support de circuit imprimé 201 est disposée en outre sur le support 300 de manière à ce que lesdites sources lumineuses 200A, 200B, 200C, 200D soient situées en vis-à-vis de la face d'entrée 110 de la lame 100 et soient orientées de sorte que le faisceau lumineux émis par chacune de ces sources soit dirigé vers cette face d'entrée 110.

Le support 300 est traversé par ailleurs, en vis-à-vis de chacune de ces sources lumineuses 200A, 200B, 200C, 200D, par un trou 301A, 301B, 301C, 301D s'étendant depuis cette source lumineuse 200A, 200B, 200C, 200D jusqu'au fond 303 de la gorge 302 dans laquelle est enchâssée la lame 100.

Ces trous 301A, 301B, 301C, 301D permettent de conduire les faisceaux lumineux émis par ces sources jusqu'à la face d'entrée 110 de la tranche 102 de la lame. En particulier, deux de ces trous 301B, 301C sont situés, pour l'un 301B, au droit de la première facette 111A formée dans la face d'entrée 110 de la lame, et pour l'autre 301C, au droit de la deuxième facette 111B formée dans cette face d'entrée 110.

Guider ainsi la lumière émise par ces sources lumineuses 200A, 200B, 200C, 200D jusqu'à cette face d'entrée 110 permet :
- d'une part, d'utiliser un maximum de la puissance lumineuse émise par ces source pour l'éclairage de la tranche 102 de la lame, et
- d'autre part, d'éviter des fuites de lumière qui pourraient s'avérer gênantes pour le conducteur du véhicule, en particulier de nuit.

Par fuite de lumière, on désigne ici un rayonnement lumineux issu de l'une des sources de cet élément d'afficheur 10, et qui sortirait de l'élément d'afficheur ailleurs que par la tranche 102 de la lame semi-réfléchissante.

Pour éviter au mieux de telles fuites de lumière, la surface du support 300 est par ailleurs opaque, par exemple du fait d'un revêtement opaque tel qu'une couche de peinture noire.

Ici, l'afficheur 1 comprend en outre un boîtier (non représenté). L'élément d'afficheur 10 est monté mobile dans ce boîtier. Plus précisément, cet élément d'afficheur 10 est mobile entre une position déployée, dans laquelle la lame 100 semi-réfléchissante s'étend en saillie à l'extérieur du boîtier, et une position rétractée dans laquelle la lame 100 est logée dans ce boîtier.

L'alimentation électrique des sources lumineuses 200A, 200B, 200C, 200D de l'élément d'afficheur 10 est assurée par un câble électrique 202 reliant la plaque-support de circuit imprimé 201 de l'élément d'afficheur 10 à une autre plaque-support de circuit imprimé 5 solidaire du boîtier de l'afficheur 1.

Ce câble électrique 202 est flexible pour autoriser le mouvement de l'élément d'afficheur 10 entre sa position déployée et sa position rétractée. Il est par exemple composé de plusieurs fils électriques disposés côte-à-côte les uns des autres pour former un ruban flexible.

## Revendications

1. Elément d'afficheur (10) comprenant :
- une lame (100) semi-réfléchissante formée d'une plaque transparente présentant deux faces principales (101A, 101B) reliées par une tranche (102), cette lame permettant la visualisation, par réflexion sur l'une desdites deux faces principales, d'une image à afficher, et
- une première et une deuxième sources lumineuses (200A, 200B), chacune disposée en vis-à-vis d'une face d'entrée formée sur ladite tranche , et émettant respectivement un premier et un deuxième faisceaux lumineux,
ladite face d'entrée présentant, en vis-à-vis de la première source lumineuse (200A), une première orientation de sorte que le premier faisceau lumineux présente une première direction moyenne de propagation (XA') dans la lame,
**caractérisé en ce que** ladite face d'entrée présente, en vis-à-vis de la deuxième source lumineuse (200B), une deuxième orientation distincte de la première orientation de sorte que le deuxième faisceau lumineux présente une deuxième direction moyenne de propagation (XB') dans la lame différente de la première direction moyenne de propagation (XA') et dans lequel ladite face d'entrée (110) présente, en vis-à-vis de la deuxième source lumineuse (200B), une première facette (111A) inclinée par rapport à un plan moyen (P) défini par cette face d'entrée (110), ladite deuxième orientation correspondant à l'orientation de cette première facette (111A), cette première facette (111A) étant inclinée de manière à dévier par réfraction le deuxième faisceau lumineux, lorsque ce faisceau entre dans la lame, en direction d'une zone de la tranche (102) de la lame s'étendant à partir d'une première extrémité (112A) de la face d'entrée (110) et dans lequel la première facette (111A) est définie au niveau d'une encoche ménagée dans la lame (100) semi-réfléchissante en vis-à-vis de la deuxième source lumineuse (200B).

2. Elément d'afficheur (10) selon la revendication 1, dans lequel ladite première orientation correspond à l'orientation moyenne de la face d'entrée (110) de la tranche (102) de la lame semi-réfléchissante.

3. Elément d'afficheur (10) selon l'une des revendications 1 et 2, dans lequel la zone de la tranche (102) de la lame en direction de laquelle est dévié le deuxième faisceau lumineux correspond à une face (122) reliant ladite face d'entrée (110) à une face (121) de la tranche (102) de la lame opposée à cette face d'entrée (110).

4. Elément d'afficheur (10) selon l'une des revendications 1 à 3, comprenant en outre une troisième source lumineuse (200C) disposée en vis-à-vis de ladite face d'entrée (110) et émettant un troisième faisceau lumineux, et dans lequel ladite face d'entrée présente, en vis-à-vis de la troisième source lumineuse, une troisième orientation distincte de ladite première orientation et de ladite deuxième orientation, de sorte que le troisième faisceau lumineux présente une troisième direction moyenne de propagation (XC') dans la lame différente de la première direction moyenne de propagation (XA'), et différente de la deuxième direction moyenne de propagation (XB').

5. Elément d'afficheur (10) selon la revendication 4 prise dans la dépendance de l'une des revendications 1 et 3, dans lequel ladite face d'entrée (110) présente, en vis-à-vis de la troisième source lumineuse (200C), une deuxième facette (111B), inclinée par rapport au plan moyen (P) défini par cette face d'entrée, ladite troisième orientation correspondant à l'orientation de cette deuxième facette (111B), cette deuxième facette (111B) étant inclinée de manière à dévier par réfraction le troisième faisceau lumineux, lorsqu'il entre dans la lame, en direction d'une autre zone de la tranche (102) de la lame s'étendant à partir d'une deuxième extrémité (112B) de la face d'entrée (110) opposée à la première extrémité (112A) de la face d'entrée.

6. Elément d'afficheur (10) selon la revendication 5, dans lequel la deuxième facette (111B) est définie au niveau d'une encoche ménagée dans la lame (100) semi-réfléchissante en vis-à-vis de la troisième source lumineuse (200C).

7. Elément d'afficheur (10) selon l'une des revendications 1 à 6, dans lequel le premier et le deuxième faisceaux lumineux présentent respectivement, avant d'entrer dans la lame, une première et une deuxième direction initiale moyenne de propagation (XA, XB) orthogonales au plan moyen (P) défini par ladite face d'entrée (110).

8. Elément d'afficheur (10) selon l'une des revendications 1 à 7, dans lequel lesdites sources lumineuses (200A, 200B, 200C) sont montées fixement sur une plaque-support de circuit imprimé (201) qui s'étend parallèlement à ladite face d'entrée (110).

9. Elément d'afficheur (10) selon l'une des revendications 1 à 8, dans lequel au moins l'une desdites sources lumineuses (200A, 200B, 200C) comprend une diode électroluminescente.

10. Elément d'afficheur (10) selon l'une des revendications 1 à 9, dans lequel la tranche (102) de la lame semi-réfléchissante comprend une première partie formant ladite face d'entrée (110), et une deuxième partie (120) par laquelle lesdits faisceaux lumineux sortent de la lame (100) semi-réfléchissante, cette deuxième partie (120) étant configurée pour dévier au moins en partie lesdits faisceaux lumineux.

11. Elément d'afficheur (10) selon la revendication 10, dans lequel la deuxième partie (120) de la tranche (102) de la lame semi-réfléchissante est optiquement diffusante.

12. Elément d'afficheur (10) selon l'une des revendications 1 à 11, comprenant en outre un support (300), la lame (100) semi-réfléchissante et lesdites sources lumineuses (200A, 200B, 200C) étant montées fixement sur ce support (300), un trou (301 A, 301B, 301C) étant prévu dans ce support en vis-à-vis de chacune desdites sources lumineuses (200A, 200B, 200C) pour laisser passer la lumière émise par cette source jusqu'à la face d'entrée (110) de la tranche de la lame semi-réfléchissante.

13. Afficheur (1) comprenant un élément d'afficheur (10) selon l'une des revendications 1 à 12.

14. Afficheur (1) selon la revendication 13, comprenant en outre un boîtier, ladite lame (100) semi-réfléchissante étant montée mobile par rapport à ce boîtier.

## Patentansprüche

1. Element eines Anzeigegeräts (10), das Folgendes beinhaltet:
- eine semireflektierende Scheibe (100), die aus einer transparenten Platte gebildet ist, die zwei Hauptflächen (101A, 101B) aufweist, die durch einen Rand (102) verbunden sind, wobei diese Scheibe die Visualisierung eines anzuzeigenden Bildes durch Reflexion auf eine der zwei Hauptflächen ermöglicht, und
- eine erste und eine zweite Lichtquelle (200A, 200B), die jeweils gegenüber einer an dem Rand gebildeten Eintrittsfläche angeordnet sind und einen ersten bzw. einen zweiten Lichtstrahl emittieren,
wobei die Eintrittsfläche gegenüber der ersten Lichtquelle (200A) eine erste Ausrichtung aufweist,
sodass der erste Lichtstrahl eine erste mittlere Ausbreitungsrichtung (XA') in der Scheibe aufweist, **dadurch gekennzeichnet, dass** die Eintrittsfläche gegenüber der zweiten Lichtquelle (200B) eine zweite Ausrichtung, die sich von der ersten Ausrichtung unterscheidet, aufweist, sodass der zweite Lichtstrahl eine zweite mittlere Ausbreitungsrichtung (XB') in der Scheibe, die sich von der ersten mittleren Ausbreitungsrichtung (XA') unterscheidet, aufweist, und wobei die Eintrittsfläche (110) gegenüber der zweiten Lichtquelle (200B) eine erste Facette (111A) aufweist, die mit Bezug auf eine durch diese Eintrittsfläche (110) definierte mittlere Ebene (P) geneigt ist, wobei die zweite Ausrichtung der Ausrichtung dieser ersten Facette (111A) entspricht, wobei diese erste Facette (111A) so geneigt ist, dass sie den zweiten Lichtstrahl, wenn dieser Strahl in die Scheibe eintritt, durch Brechung in Richtung eines Bereichs des Randes (102) der Scheibe ablenkt, der sich von einem ersten Ende (112A) der Eintrittsfläche (110) erstreckt, und wobei die erste Facette (111A) durch eine Einkerbung definiert ist, die in der semireflektierenden Scheibe (100) gegenüber der zweiten Lichtquelle (200B) eingerichtet ist.

2. Element eines Anzeigegeräts (10) nach Anspruch 1, wobei die erste Ausrichtung der mittleren Ausrichtung der Eintrittsfläche (110) des Randes (102) der semireflektierenden Scheibe entspricht.

3. Element eines Anzeigegeräts (10) nach einem der Ansprüche 1 und 2, wobei der Bereich des Randes (102) der Scheibe, in dessen Richtung der zweite Lichtstrahl abgelenkt wird, einer Fläche (122) entspricht, die die Eintrittsfläche (110) mit einer Fläche (121) des Randes (102) der Scheibe gegenüber dieser Eintrittsfläche (110) verbindet.

4. Element eines Anzeigegeräts (10) nach einem der Ansprüche 1 bis 3, ferner beinhaltend eine dritte Lichtquelle (200C), die gegenüber der Eintrittsfläche (110) angeordnet ist und einen dritten Lichtstrahl emittiert, und wobei die Eintrittsfläche gegenüber der dritten Lichtquelle eine dritte Ausrichtung, die sich von der ersten Ausrichtung und der zweiten Ausrichtung unterscheidet, aufweist, sodass der dritte Lichtstrahl eine dritte mittlere Ausbreitungsrichtung (XC') in der Scheibe aufweist, die sich von der ersten mittleren Ausbreitungsrichtung (XA') unterscheidet und die sich von der zweiten mittleren Ausbreitungsrichtung (XB') unterscheidet.

5. Element eines Anzeigegeräts (10) nach Anspruch 4 in Abhängigkeit von einem der Ansprüche 1 bis 3, wobei die Eintrittsfläche (110) gegenüber der dritten Lichtquelle (200C) eine zweite Facette (111B) aufweist, die mit Bezug auf die durch diese Eintrittsfläche definierte mittlere Ebene (P) geneigt ist, wobei die dritte Ausrichtung der Ausrichtung dieser zweiten Facette (111B) entspricht, wobei diese zweite Facette (111B) so geneigt ist, dass sie den dritten Lichtstrahl, wenn er in die Scheibe eintritt, durch Brechung in Richtung eines anderen Bereichs des Randes (102) der Scheibe ablenkt, der sich von einem zweiten Ende (112B) der Eintrittsfläche (110) gegenüber dem ersten Ende (112A) der Eintrittsfläche erstreckt.

6. Element eines Anzeigegeräts (10) nach Anspruch 5, wobei die zweite Facette (111B) durch eine Einkerbung definiert ist, die in der semireflektierenden Scheibe (100) gegenüber der dritten Lichtquelle (200C) eingerichtet ist.

7. Element eines Anzeigegeräts (10) nach einem der Ansprüche 1 bis 6, wobei der erste und der zweite Lichtstrahl vor dem Eintreten in die Scheibe eine erste bzw. eine zweite anfängliche mittlere Ausbreitungsrichtung (XA, XB) aufweisen, die zu der durch die Eintrittsfläche (110) definierten mittleren Ebene (P) orthogonal sind.

8. Element eines Anzeigegeräts (10) nach einem der Ansprüche 1 bis 7, wobei die Lichtquellen (200A, 200B, 200C) an einer Trägerplatte einer gedruckten Schaltung (201), die sich parallel zu der Eintrittsfläche (110) erstreckt, fest angebracht sind.

9. Element eines Anzeigegeräts (10) nach einem der Ansprüche 1 bis 8, wobei mindestens eine der Lichtquellen (200A, 200B, 200C) eine Elektrolumineszenzdiode beinhaltet.

10. Element eines Anzeigegeräts (10) nach einem der Ansprüche 1 bis 9, wobei der Rand (102) der semireflektierenden Scheibe einen ersten Abschnitt, der die Eintrittsfläche (110) bildet, und einen zweiten Abschnitt (120), durch den die Lichtstrahlen aus der semireflektierenden Scheibe (100) austreten, beinhaltet, wobei dieser zweite Abschnitt (120) dazu konfiguriert ist, die Lichtstrahlen mindestens teilweise abzulenken.

11. Element eines Anzeigegeräts (10) nach Anspruch 10, wobei der zweite Abschnitt (120) des Randes (102) der semireflektierenden Scheibe optisch streuend ist.

12. Element eines Anzeigegeräts (10) nach einem der Ansprüche 1 bis 11, ferner beinhaltend einen Träger (300), wobei die semireflektierende Scheibe (100) und die Lichtquellen (200A, 200B, 200C) an diesem Träger (300) fest angebracht sind, wobei in diesem Träger gegenüber jeder der Lichtquellen (200A, 200B, 200C) eine Öffnung (301A, 301B, 301C) vorgesehen ist, um das durch diese Quelle emittierte Licht bis zu der Eintrittsfläche (110) des Randes der semireflektierenden Scheibe durchzulassen.

13. Anzeigegerät (1), das ein Element eines Anzeigegeräts (10) nach einem der Ansprüche 1 bis 12 beinhaltet.

14. Anzeigegerät (1) nach Anspruch 13, ferner beinhaltend ein Gehäuse, wobei die semireflektierende Scheibe (100) mit Bezug auf dieses Gehäuse beweglich angebracht ist.

## Claims

1. Display element (10) comprising:
- a semi-reflective panel (100) formed from a transparent plate having two main faces (101A, 101B) that are joined by an edge face (102) , this panel making it possible to view, by reflection from one of said two main faces, an image to be displayed, and
- a first light source (200A) and a second light source (200B), each placed facing an entrance face formed on said edge face, and emitting a first light beam and a second light beam, respectively,
said entrance face having, facing the first light source (200A), a first orientation so that the first light beam has a first average direction of propagation (XA') in the panel,
**characterized in that** said entrance face has, facing the second light source (200B), a second orientation different from the first orientation so that the second light beam has a second average direction of propagation (XB') in the panel that is different from the first average direction of propagation (XA') and wherein said entrance face (110) has, facing the second light source (200B), a first facet (111A) that is inclined with respect to a midplane (P) defined by this entrance face (110), said second orientation corresponding to the orientation of this first facet (111A), this first facet (111A) being inclined so as to deviate, by refraction, the second light beam, when this beam enters into the panel, in the direction of a region of the edge face (102) of the panel that extends from a first end (112A) of the entrance face (110) and wherein the first facet (111A) is defined in a notch produced in the semi-reflective panel (100) facing the second light source (200B) .

2. Display element (10) according to Claim 1, wherein said first orientation corresponds to the average orientation of the entrance face (110) of the edge face (102) of the semi-reflective panel.

3. Display element (10) according to either of Claims 1 and 2, wherein the region of the edge face (102) of the panel in the direction of which the second light beam is deviated corresponds to a face (122) joining said entrance face (110) to a face (121) of the edge face (102) of the panel that is opposite to this entrance face (110) .

4. Display element (10) according to one of Claims 1 to 3, furthermore comprising a third light source (200C) that is placed facing said entrance face (110) and that emits a third light beam, and wherein said entrance face has, facing the third light source, a third orientation different from said first orientation and from said second orientation, so that the third light beam has a third average direction of propagation (XC') in the panel that is different from the first average direction of propagation (XA'), and different from the second average direction of propagation (XB').

5. Display element (10) according to Claim 4 when dependent on one of Claims 1 and 3, wherein said entrance face (110) has, facing the third light source (200C), a second facet (111B), that is inclined with respect to the midplane (P) defined by this entrance face, said third orientation corresponding to the orientation of this second facet (111B), this second facet (111B) being inclined so as to deviate, by refraction, the third light beam, when it enters into the panel, in the direction of another region of the edge face (102) of the panel that extends from a second end (112B) of the entrance face (110) that is opposite to the first end (112A) of the entrance face.

6. Display element (10) according to Claim 5, wherein the second facet (111B) is defined in a notch produced in the semi-reflective panel (100) facing the third light source (200C).

7. Display element (10) according to one of Claims 1 to 6, wherein the first light beam and the second light beam have, before entering into the panel, a first initial average direction of propagation (XA) and a second initial average direction of propagation (XB) that are orthogonal to the midplane (P) defined by said entrance face (110), respectively.

8. Display element (10) according to one of Claims 1 to 7, wherein said light sources (200A, 200B, 200C) are fixedly mounted on a printed circuit board (201) that extends parallel to said entrance face (110).

9. Display element (10) according to one of Claims 1 to 8, wherein at least one of said light sources (200A, 200B, 200C) comprises a light-emitting diode.

10. Display element (10) according to one of Claims 1 to 9, wherein the edge face (102) of the semi-reflective panel comprises a first portion forming said entrance face (110), and a second portion (120) via which said light beams exit from the semi-reflective panel (100), this second portion (120) being configured to deviate at least partially said light beams.

11. Display element (10) according to Claim 10, wherein the second portion (120) of the edge face (102) of the semi-reflective panel is optically scattering.

12. Display element (10) according to one of Claims 1 to 11, furthermore comprising a holder (300), the semi-reflective panel (100) and said light sources (200A, 200B, 200C) being fixedly mounted on this holder (300), a hole (301A, 301B, 301C) being provided in this holder facing each of said light sources (200A, 200B, 200C) in order to let pass the light emitted by this source to the entrance face (110) of the edge face of the semi-reflective panel.

13. Display (1) comprising a display element (10) according to one of Claims 1 to 12.

14. Display (1) according to Claim 13, furthermore comprising a casing, said semi-reflective panel (100) being mounted so as to be able to move with respect to this casing.
